# EUROPÄISCHE PATENTSCHRIFT

(11) **EP 2 662 538 B1**
(45) Veröffentlichungstag und Bekanntmachung des Hinweises auf die Patenterteilung: **12.06.2019**
(21) Anmeldenummer: 13164956.8
(22) Anmeldetag: 23.04.2013
(51) Int. Cl.: F01D 25/26, F02C 6/12

(54) **Anbindung eines doppelwandigen Turboladergehäuses**
Connection of a double-walled turbocharger housing
Liaison d'un boîtier de turbocompresseur à double paroi

(30) Priorität: 09.05.2012 DE 102012009090
(43) Veröffentlichungstag der Anmeldung: 13.11.2013
(73) Patentinhaber: Benteler Automobiltechnik GmbH, 33102 Paderborn (DE)
(72) Erfinder: Grußmann, Elmar, 33184 Altenbeken (DE); Lesch, Artur, 32839 Steinheim (DE)
(74) Vertreter: Griepenstroh, Jörg

(56) Entgegenhaltungen:
- EP-A1- 1 498 586
- EP-A1- 1 895 120
- EP-A2- 1 357 278
- DE-A1-102009 054 403
- US-A1- 2010 005 798

## Beschreibung

Die Erfindung betrifft eine Anbindung eines doppelwandigen Turboladergehäuses aus Blech mit einer inneren, heiße Abgase führenden Blechschale und einer dazu beabstandeten relativ kalten äußeren Blechschale an einen Flansch mit einem umlaufenden Kragen über eine gemeinsame Schweißnaht gemäß den Merkmalen im Oberbegriff von Patentanspruch 1.

Eine gattungsgemäße Anbindung ist aus der DE 100 22 052 A1 bekannt. Die Druckschrift offenbart insbesondere in Figur 5 ein doppelwandiges Turboladergehäuse mit einem Laufradgehäuse aus Blech, welches von einem Außengehäuse aus Blech umgeben ist, wobei zwischen den beiden Gehäusen ein Luftspalt besteht. Dieser Luftspalt wirkt wärmeisolierend und reduziert die Wärmestrahlung. Das Außengehäuse ist einerseits am Auslassrohr und andererseits am Verbindungsflansch zum Lagergehäuse angeschweißt. Dabei weist der Verbindungsflansch zum Lagergehäuse auf seiner dem heißen Abgas zugewandten Seite einen umlaufenden Kragen auf, der als Anschlag oder Gegenhalter für das Außengehäuse und das Innengehäuse dient. Es ist nicht genau beschrieben, aber vermutlich sind Innenschale, Außenschale und Flansch miteinander über eine gemeinsame Schweißnaht verschweißt. Allerdings ist die Schweißnaht in vollem Umfang der Belastung durch die heißen Abgase ausgesetzt, da sich die Schweißnaht zumindest teilweise im Inneren des Laufradgehäuses befindet. Insbesondere das Laufradgehäuse ist im Betrieb hohen thermischen Belastungen ausgesetzt, nämlich Temperaturgradienten von mehr als 800° C. Diesen Belastungen ist die verhältnismäßig spröde Schweißnaht im Dauerbetrieb nicht gewachsen. Hinzu kommt, dass Schweißspritzer im Laufradgehäuse den Turbolader zerstören können, was eine äußerst sorgfältige Nacharbeitung des Laufradgehäuses notwendig macht.

Aus der DE 102 23 838 C1 ist eine Anordnung zur Führung von Abgasen einer Verbrennungskraftmaschine bekannt mit wenigstens einem endseitig einer Hohlstruktur angefügten Flansch, wobei die Hohlstruktur einen Außenmantel und einen Innenmantel besitzt. Der Innenmantel ist flanschseitig aus dem Außenmantel herausgeführt und umgreift mit einer nach außen gerichteten Bördelung einen Endabschnitt des Außenmantels außenumfänglich. Die Bördelung ist zusammen mit dem Endabschnitt in den Flansch eingesteckt und an der der Mündung der Hohlstruktur abgewandten Seite des Flansches mit diesem stoffschlüssig verbunden. In Richtung der Hohlstruktur ist der Außenmantel in einem Übergangsabschnitt konisch verjüngt. An den Übergangsabschnitt schließt sich ein im Durchmesser verjüngter Endabschnitt des Außenmantels an, welcher derart bemessen ist, dass er den Innenmantel an seinem Außenumfang kontaktiert. Nach der Positionierung der Hohlstruktur in dem Kragen des Flansches und insbesondere nach der Ausrichtung der Stirnfläche der Bördelung in der Radialebene RE des Kragens erfolgt eine schweißtechnische Festlegung der Hohlstruktur an dem Flansch durch Herstellung einer umlaufenden Kehlnaht am Außenumfang des Außenmantels im Übergangsbereich zwischen dem Übergangsabschnitt und dem Endabschnitt sowie der Radialebene RE des Kragens. Dabei wird die zwischen dem Kragen und dem Endabschnitt eingefasste Bördelung stoffschlüssig fixiert. Durch diese Ausgestaltung sind in einem einzigen Arbeitsgang sowohl der Innenmantel als auch der Außenmantel stoffschlüssig mit dem Flansch verbunden, ohne dass durch Schweißspritzer im Mündungsbereich der Hohlstruktur bedingte Nacharbeiten erforderlich sind. Eine Anbindung des hier in Frage kommenden doppelwandigen Turboladergehäuses ist so jedoch nicht möglich, weil die innere, heiße Abgase führende Blechschale durch den Kontakt mit der relativ kalten äußeren Blechschale im Betrieb aufgrund der Wärmeausdehnung verklemmen und dadurch auf Dauer abscheren würde.

Die DE 10 2009 042 260 A1 zeigt ein Turbinengehäuse eines Abgasturboladers. Das Turbinengehäuse umfasst ein Außengehäuse, das mit einem Lagerflansch verschweißt ist. Das Außengehäuse begrenzt einen gasdichten Innenraum. Innerhalb des Außengehäuses befindet sich ein Laufradgehäuse, das aus zwei Blechschalen gebildet ist, die am Außenumfang des Laufradgehäuses miteinander verschweißt sind. Auch das Außengehäuse besteht aus zwei Blechschalen, welche ebenfalls am Außenumfang miteinander verschweißt sind. Die dem Lagerflansch zugewandten

Blechschalen des Außengehäuses und des Laufradgehäuses sind mit dem Lagerflansch verbunden. Die Blechschale des Außengehäuses ist über eine Schweißnaht mit einem in Radialrichtung gegenüber einem Grundkörper des Lagerflansches vorstehenden Steg verschweißt. Dem Steg ist in Richtung des Laufradgehäuses eine Nut vorgelagert, auf die wiederum ein Kragen folgt, an welchem schließlich die Blechschale des Laufradgehäuses stirnseitig, d. h. in Axialrichtung, anliegt. Die Blechschale des Laufradgehäuses liegt radial außenseitig an einem in Axialrichtung vorstehenden Vorsprung an. Das Laufradgehäuse ist im Abstand vom Außengehäuse an dem Lagerflansch befestigt. Der Abstand ist maximal gewählt. Zudem ist der Kontaktbereich des Laufradgehäuses mit dem Grundkörper relativ groß. Dadurch kann das thermisch wesentlich stärker belastete Laufradgehäuse eine entsprechend große Wärmemenge an den Grundkörper ableiten. Die Fixierung des Laufradgehäuses an dem Grundkörper kann stoffschlüssig, formschlüssig oder kraftschlüssig erfolgen. Hierbei sind das Außengehäuse und das Innengehäuse jedoch getrennt voneinander mit dem Flansch verbunden.

Eine andere Anbindungsvariante zeigt die DE 10 2008 052 552 A1. Ein Turbinengehäuse umfasst ein Außengehäuse, das sich von einem Gehäuseflansch bis zu einem Auslassflansch erstreckt. Das Außengehäuse ist sowohl mit dem Gehäuseflansch als auch mit dem Auslassflansch verschweißt und begrenzt einen gasdichten Innenraum. Innerhalb dieses Außengehäuses befindet sich ein Laufradgehäuse, das aus zwei Blechschalen gebildet ist, die am Außenumfang des Laufradgehäuses miteinander verschweißt sind. In diesem Fall ist nur das Außengehäuse mit dem Gehäuseflansch verschweißt. Das Laufradgehäuse liegt auf dem Außengehäuse auf und kann an dieser Auflagestelle schieben. Folglich ist das Laufradgehäuse jedoch nicht gasdicht.

Aus der DE 10 2009 054 403 A1, EP 1 357 278 A2 sowie US 2010/0005798 A1 sind jeweils Anbindungen von Blechschalengehäusen für Abgasturbolader bekannt.

Aus der EP 1 895 120 A1 und EP 1 498 586 A1 sind Koppelungsmöglichkeiten zur Herstellung von Abgasleitungsabschnitten bzw. der Anordnung einer Abgasreinigungsanordnung in einer Abgasanlage bekannt.

Ausgehend vom aufgezeigten Stand der Technik ist es daher Aufgabe der vorliegenden Erfindung, eine gattungsgemäße Anbindung eines doppelwandigen Turboladergehäuses so zu verbessern, dass insbesondere im Hinblick auf die thermischen Belastungen der Schweißnaht eine verbesserte Dauerhaltbarkeit gegeben ist.

Diese Aufgabe löst die Erfindung mit einer Anbindung gemäß den Merkmalen des Anspruchs 1. Vorteilhafte Ausführungsvarianten sind Gegenstand der abhängigen Patentansprüche.

Die Anbindung wird bei einem doppelwandigen Turboladergehäuse mit einer inneren Blechschale und einer dazu über einen Luftspalt beabstandeten äußeren Blechschale an einen Lagerflansch mit einem Kragen über eine gemeinsame Schweißnaht erfindungsgemäß derart ausgeführt, dass der Lagerflansch auf einer einem heißen Abgas abgewandten Außenseite mit dem Kragen versehen ist, die innere Blechschale an einem äußeren Ende einen Kragen aufweist mit dem sie die äußere Blechschale umgreift und beide Blechschalen über eine gemeinsame Schweißnaht mit dem Kragen des Lagerflansches verbunden sind, wobei bis zum äußeren Ende der inneren Blechschale zwischen der inneren Blechschale und der äußeren Blechschale ein Luftspalt vorhanden ist.

Durch den Luftspalt selber findet somit eine thermische Entkoppelung statt, so dass durch die im Innenbereich des Turboladergehäuses vorherrschenden Abgase, die mitunter bis zu mehr als 800°C betragen können, durch den Luftspalt derart isoliert werden, dass sie sich nicht an die äußere Schale in dem hohen Maße übertragen, wie es bei Wärmeleitung der Fall wäre. Die innere Blechschale ist somit von der äußeren Blechschale aufgrund des Luftspaltes thermisch isoliert. Dadurch dass der Luftspalt bis zum äußeren Ende der inneren Blechschale ausgebildet ist und somit die innere Blechschale von der äußeren Blechschale ebenfalls bis dorthin entkoppelt ist es jedoch so, dass von der inneren Blechschale an die äußere Blechschale eine Wärmeleitung erfolgt. Diese Wärmeleitung wird jedoch durch die erfindungsgemäße Anordnung des Umkragens der inneren Blechschale von dem Ende der äußeren Blechschale derart kompensiert, dass sich die innere Blechschale relativ gegenüber der äußeren Blechschale anders thermisch ausdehnen bzw. verziehen kann, ohne sich jedoch dabei nachteilig auf die gemeinsame Schweißnaht auszuwirken.

Bevorzugt ist dabei das Ende der inneren Blechschale mithin der Kragen der inneren Blechschale, zwischen der äußeren Blechschale und dem Kragen des Lagerflansches eingespannt, insbesondere über eine jeweilige Übergangspassung. Dabei kann der Kragen der inneren Blechschale mit einer Übergangspassung in dem Kragen des Lagerflansches eingespannt sein und wiederum der Kragen der inneren Blechschale über den Kragen der äußeren Blechschale ebenfalls mit einer Übergangspassung in den Kragen des Lagerflansches eingelegt sein.

In besonders bevorzugter Ausführungsvariante umkragt der Kragen der inneren Blechschale den Kragen der äußeren Blechschale. Unter einem Umkragen ist im Rahmen der Erfindung zu verstehen, dass die innere Blechschale das Ende, mithin den Kragen, der äußeren Blechschale in Radialrichtung nach außen übergreift und dann in Axialrichtung derart weitergeführt wird, dass der Flansch der äußeren Blechschale umgriffen ist. Insbesondere ist es durch diese Anordnung zum einen möglich, den Luftspalt mithin die thermische Trennung bzw. Isolierung bis zum äußeren Ende zu führen, zum anderen kann sich jedoch die innere Blechschale unabhängig von der äußeren Blechschale aufgrund von thermischen Spannungen ausdehnen, ohne dabei die gemeinsame Schalenverbindung und Schweißnaht in ihrer Dauerhaltbarkeit negativ zu beeinflussen. Hierdurch wird eine homogene Spannungsverteilung realisiert, die zu einer besseren Spannungsverteilung führt.

Nachfolgend ist die Erfindung anhand der Figuren genauer beschrieben. Dabei zeigen:
- Figur 1: einen Schnitt durch ein erfindungsgemäßes doppelwandiges Turboladergehäuse,
- Figur 2: einen Schnitt durch das erfindungsgemäße Turboladergehäuse in Verbindung mit einem Lagerflansch und weiterer Anbauteile,
- Figur 3: einen Schnitt durch ein weiteres erfindungsgemäßes Turboladergehäuse.

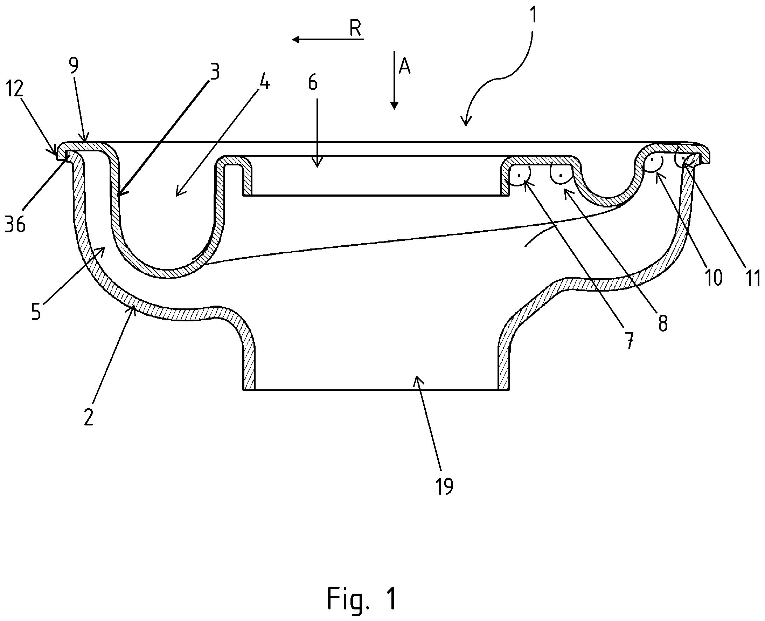

Figur 1 offenbart ein erfindungsgemäßes doppelwandiges Turboladergehäuse 1 im Schnitt. Gezeigt sind hier nur eine äußere Blechschale 2 und eine innere Blechschale 3. Die innere Blechschale 3 bildet einen Gaskanal 4 aus, in dem während eines Betriebs heißes Abgas strömt. Die äußere Blechschale 2 ist von der inneren Blechschale 3 durch einen Luftspalt 5 beabstandet. In eine zentrale Öffnung 6 der inneren Blechschale 3 wird ein nicht dargestelltes Auslassrohr eingesteckt. Die innere Blechschale 3 ist an der zentralen Öffnung 6 über zwei annähernd rechte Winkel 7, 8 umgestellt. An ihrem äußeren Ende 9 ist die innere Blechschale 3 ebenfalls über zwei annähernd rechte Winkel 10, 11 um insgesamt etwa 180° umgestellt und bildet so einen Kragen 12 aus, gegen den sich die äußere Blechschale 2 abstützt. Der Luftspalt 5 zieht sich bis in das äußere Ende 9 der inneren Blechschale 3, so dass die im Gaskanal 4 heiße Abgase führende innere Blechschale 3 über den gesamten Gaskanal 4 zur äußeren Blechschale 2 über den Luftspalt 5 beabstandet ist.

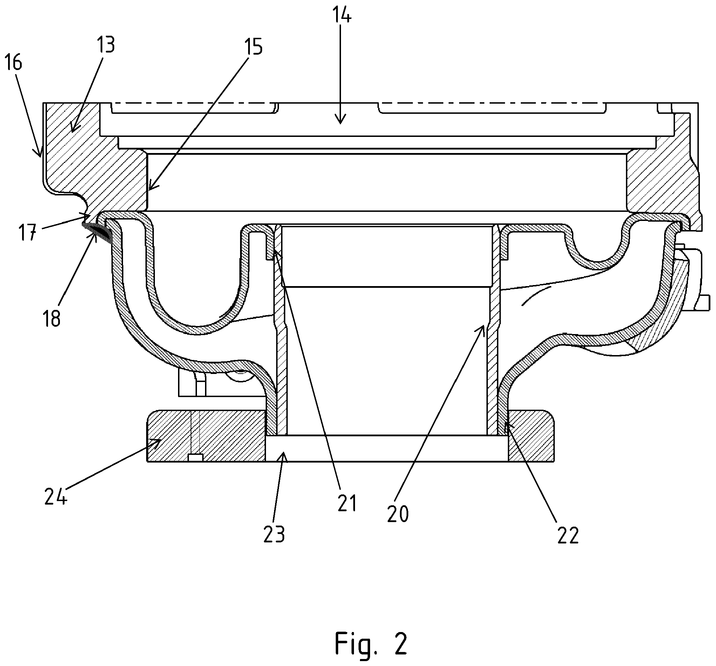

In Figur 1 ist ferner dargestellt ein Kragen 36 der äußeren Blechschale 2, wobei der Kragen 36 in Radialrichtung R orientiert gegenüber der äußeren Blechschale 2 abstehend ausgebildet ist. Der Kragen 36 ist dabei formschlüssig von dem Kragen 12 der inneren Blechschale 3 umgriffen, so dass der Kragen 36 in Radialrichtung R an dem Kragen 12 der inneren Blechschale 3 anliegt. Insbesondere ist im Rahmen der Erfindung zwischen dem Kragen 36 und dem Kragen 12 eine Übergangspassung ausgebildet. Ganz besonders bevorzugt drückt der Kragen 36 dann den Kragen 12 wie in Figur 2 dargestellt, an den Kragen 17 des Lagerflansches 13.

In Figur 2 ist das Turboladergehäuse 1 in Verbindung mit einem Lagerflansch 13 dargestellt. Das äußere Ende 9 der inneren Blechschale 3 liegt auf dem Lagerflansch 13 auf. Auf der dem Turboladergehäuse 1 gegenüberliegenden Seite des Lagerflansches 13 wird in eine zentrale Öffnung 14 des Lagerflansches 13 eine nicht dargestellte Rumpfgruppe eingeschoben, die gegen den Lagerflansch 13 über eine nicht dargestellte Dichtung abgedichtet ist. Die Rumpfgruppe trägt eine ebenfalls nicht dargestellte Läufergruppe. Der Lagerflansch 13 wird daher auf seiner Innenseite 15 vom heißen Abgas beaufschlagt. Erfindungsgemäß ist auf der dem heißen Abgas abgewandten Außenseite 16 des Lagerflansches 13 ein umlaufender Kragen 17 ausgebildet. Gegen diesen Kragen 17 stützen sich die innere und äußere Blechschale 2, 3 des Turboladergehäuses 1 ab. Der Kragen 12 der inneren Blechschale 3, die äußere Blechschale 2 und der Kragen 17 des Lagerflansches 13 werden über eine umlaufende Schweißnaht 18 miteinander verbunden. Sinn und Zwecke dieser erfindungsgemäßen Anordnung ist es, die Schweißnaht 18 und die Schalenanbindung zu entlasten. Die innere Blechschale 3 kann an ihrem äußeren Ende 9 Dehnungsarbeit verrichten, ohne Spannungen in die Schweißnaht 18 einzubringen. Die Dauerhaltbarkeit des Systems wird erhöht. In allen drei Figuren handelt es sich bei den dargestellten Turboladergehäusen 1, 25 um solche für einen Turbolader mit verstellbarer Turbinengeometrie. Aufgrund der anders kaum einzuhaltenden Toleranzen befindet sich die Läufergruppe direkt auf der Rumpfgruppe und der Gaskanal 4 wird über die Rumpfgruppe und deren Dichtung abgedichtet. In die zentrale Öffnung 6 der inneren Blechschale 3 und in eine zentrale Öffnung 19 der äußeren Blechschale 2 ist ein Auslassrohr 20 eingeschoben, welches sich gegen eine innere Umstellung 21 der inneren Blechschale 3 abstützt und mit dieser inneren Umstellung 21 über eine Schweißung fest verbunden ist. An der zentralen Öffnung 19 der äußeren Blechschale 2 ist ein Kragen 22 ausgebildet, an den sich das Auslassrohr 20 abstützt. Der Kragen 22 und das Auslassrohr 20 werden in eine zentrale Öffnung 23 eines Schussflansches 24 eingeschoben. Mindestens der Kragen 22 und der Schussflansch 24 werden über eine Schweißung miteinander verbunden. Das Auslassrohr 20 wird entweder ebenfalls mit dem Kragen 22 und dem Schussflansch 24 fest verbunden oder alternativ wird ein Schiebesitz ohne feste Verbindung ausgebildet, um auftretende Spannungen im Turboladergehäuse 1 zu reduzieren.

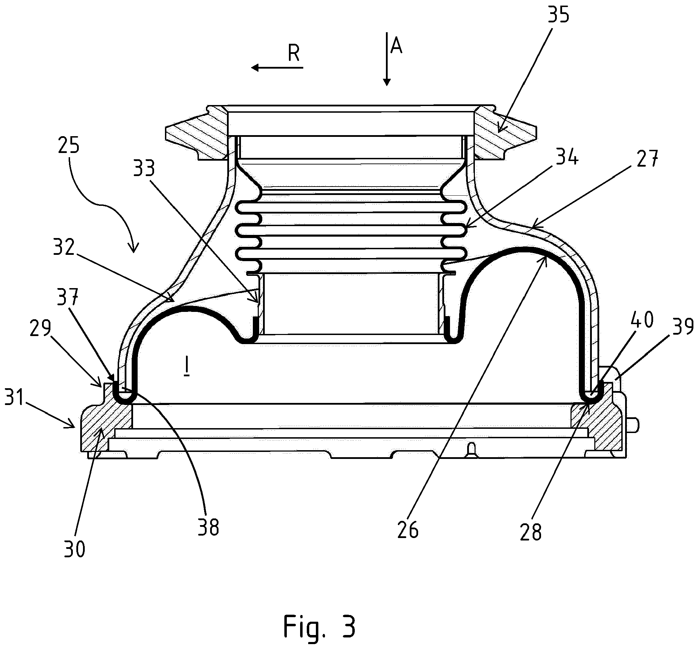

Figur 3 zeigt ein alternatives Turboladergehäuse 25. Die innere Blechschale 26 umgreift die äußere Blechschale 27 mit ihrem äußeren Ende 28. Beide Blechschalen 26, 27 stützen sich an dem umlaufenden Kragen 29 des Lagerflansches 30 ab, der auf der dem heißen Abgas abgewandten Außenseite 31 des Lagerflansches 30 ausgebildet ist. Zwischen den beiden Blechschalen 26, 27 ist ein Luftspalt 32 vorhanden, der sich bis in das äußere Ende 28 der inneren Blechschale 26 erstreckt. Bei diesem Turboladergehäuse 25 ist der Abstand zwischen der inneren Blechschale 26 und der äußeren Blechschale 27 deutlich geringer, also der Luftspalt 32 kleiner als bei der Variante des Turboladergehäuses 1 gemäß den Figuren 1 und 2. Dennoch führt auch dieser relativ kleine Luftspalt 32 zu einer deutlich geringeren thermischen Belastung der äußeren Blechschale 27 und vermeidet Spannungen in der Schweißnaht und der Schalenanbindung, mit der der Kragen 29 des Lagerflansches 30, die äußere Blechschale 27 und die innere Blechschale 26 miteinander verbunden werden. Bereits ein Mindestabstand von 1 mm genügt, um die auftretenden Belastungen deutlich zu reduzieren. Im Übrigen ist hier das Auslassrohr 33 über einen Faltenbalg 34 mit der äußeren Blechschale 27 und dem Schussflansch 35 gefügt. Der Faltenbalg übernimmt den Dehnungsausgleich zwischen der heißen inneren Blechschale 26 und dem relativ kalten Außensystem.

Weiterhin dargestellt ist, dass ein äußeres Ende 38 der äußeren Blechschale 27 von einem umgestellten Kragen 37 der inneren Blechschale 26 umgriffen ist. Unter einem Umgreifen ist dabei im Rahmen der Erfindung auch ein Umkragen zu verstehen. Das Ende 38 der äußeren Blechschale 27 ist mithin von dem umgestellten Kragen 37 der inneren Blechschale 26 in Radial- R aber auch in Axialrichtung A umgriffen. Auf der rechten Seite von Figur 3 ist dargestellt eine Schweißnaht 39 mit der dann wiederum das Ende 38 sowie der umgestellte Kragen 37 mit dem Kragen 29 des Lagerflansches 30 gekoppelt werden. Insbesondere ist diese Ausführungsvariante vorteilig, da der Luftspalt 32 bis zu einem äußeren Luftspaltende 40 ausgebildet ist und mithin die äußere Blechschale 27 insbesondere das Ende 38 der äußeren Blechschale 27 vollständig von dem Innenraum I thermisch entkoppelt. Durch den umgestellten Kragen bzw. das Umkragen zwischen dem Ende 38 und dem umgestellten Kragen 37 ist es weiterhin möglich, dass sich die innere Blechschale 26 auf die Bildebene von Figur 3 bezogen nach oben und in Radialrichtung R nach außen oder innen bezogen auf den Innenraum I ausdehnt, ohne sich dabei nachteilig auf die Schweißnaht 39 auszuwirken. Im Rahmen der Erfindung kann auch hier wiederum das Ende 38 optional derart mit einer Übergangspassung ausgebildet sein, dass es das äußere Ende des umgestellten Kragens 37 an dem Kragen 29 des Lagerflansches 30 in Radialrichtung drückt bzw. presst.

### Bezugszeichen:

1 - Turboladergehäuse
2 - äußere Blechschale
3 - innere Blechschale
4 - Gaskanal
5 - Luftspalt
6 - zentrale Öffnung von 3
7 - rechter Winkel
8 - rechter Winkel
9 - äußeres Ende von 3
10- rechter Winkel
11 - rechter Winkel
12 - Kragen
13 - Lagerflansch
14 - Zentrale Öffnung von 13
15 - Innenseite von 13
16 - Außenseite von 13
17 - Kragen von 13
18 - Schweißnaht
19 - zentrale Öffnung von 2
20 - Auslassrohr
21 - innere Umstellung von 3
22 - Kragen von 2
23 - zentrale Öffnung von 24
24 - Schussflansch
25 - Turboladergehäuse
26 - innere Blechschale
27 - äußere Blechschale
28 - äußere Ende von 26
29 - Kragen von 30
30 - Lagerflansch
31 - Außenseite von 30
32 - Luftspalt
33 - Auslassrohr
34 - Faltenbalg
35 - Schussflansch
36 - Kragen zu 2
37 - umgestellter Kragen zu 3
38 - Ende zu 2
39 - Schweißnaht
40 - äußerer Luftspalt
R - Radialrichtung
A - Axialrichtung
I - Innenraum

## Patentansprüche

1. Anbindung eines doppelwandigen Turboladergehäuses (1, 25) mit einer inneren Blechschale (3, 26) und einer dazu über einen Luftspalt (5, 32) beabstandeten äußeren Blechschale (2, 27) an einen Lagerflansch (13, 30) mit einem Kragen (17, 29) über eine gemeinsame Schweißnaht (18), wobei der Lagerflansch (13, 30) auf einer einem heißen Abgas abgewandten Außenseite (16, 31) mit dem Kragen (17, 29) versehen ist, die innere Blechschale (3, 26) an einem äußeren Ende (9, 28) einen Kragen (12) aufweist, mit dem sie die äußere Blechschale (2, 27) umgreift und wobei beide Blechschalen (3, 26 und 2, 27) über eine gemeinsame Schweißnaht (18) mit dem Kragen (17, 29) des Lagerflansches (13, 30) verbunden werden, wobei bis zum äußeren Ende (9, 28) der inneren Blechschale (3, 26) zwischen der inneren Blechschale (3, 26) und der äußeren Blechschale (2, 27) ein Luftspalt (5, 32) vorhanden ist.

2. Anbindung eines doppelwandigen Turboladergehäuses nach Anspruch 1, **dadurch gekennzeichnet, dass** das Turboladergehäuse (1, 25) über den Lagerflansch (13, 30) an eine Läufergruppe mit einer verstellbaren Turbinengeometrie anbindbar ist.

3. Anbindung eines doppelwandigen Turboladergehäuses nach einem der vorangegangenen Ansprüche, **dadurch gekennzeichnet, dass** der Luftspalt (5, 32) am äußeren Ende (9, 28) der inneren Blechschale (3, 26) eine Mindestbreite von 1 mm aufweist.

4. Anbindung eines doppelwandigen Turboladergehäuses nach einem der vorangegangenen Ansprüche, **dadurch gekennzeichnet, dass** der Kragen (12) der inneren Blechschale (3, 26) zwischen der äußeren Blechschale (2, 27) und dem Kragen (17, 29) eingespannt ist, insbesondere durch eine jeweilige Übergangspassung.

5. Anbindung eines doppelwandigen Turboladergehäuses nach einem der vorangegangenen Ansprüche, **dadurch gekennzeichnet, dass** die innere Blechschale (3, 26) an ihrem äußeren Ende (9) in Radialrichtung (R) nach außen stehend ausgebildet ist, wobei der Kragen (12) um im Wesentlichen 90° gegenüber der Radialrichtung (R) und von dem Lagerflansch (13) weg orientiert angeordnet ist.

6. Anbindung eines doppelwandigen Turboladergehäuses nach einem der vorangegangenen Ansprüche, **dadurch gekennzeichnet, dass** die äußere Blechschale (2) einen in Radialrichtung orientierten Kragen (36) aufweist, wobei der Kragen (36) von innen an den Kragen (12) zur Anlage kommt und insbesondere den Kragen (12) der inneren Blechschale (2) gegen den Kragen (17) der Lagerflansche (13) in Radialrichtung (R) anliegt.

7. Anbindung eines doppelwandigen Turboladergehäuses nach einem der vorangegangenen Ansprüche, **dadurch gekennzeichnet, dass** die innere Blechschale (26) an ihrem äußeren Ende (28) einen nach außen umgestellten Kragen (37) aufweist, wobei zwischen dem umgestellten Kragen (37) ein Ende (38) der äußeren Blechschale (27) angeordnet ist.

8. Anbindung eines doppelwandigen Turboladergehäuses nach einem der vorangegangenen Ansprüche, **dadurch gekennzeichnet, dass** die innere Blechschale (26) ein Ende (38) der äußeren Blechschale (27) in Radialrichtung (R) und/oder Axialrichtung (A) zumindest abschnittsweise umkragt.

## Claims

1. Connection of a double-walled turbocharger housing (1, 25) with an inner sheet metal shell (3, 26), and an outer sheet metal shell (2, 27) spaced apart from the inner sheet metal shell by an air gap (5, 32) on a bearing flange (13, 30) with a collar (17, 29) via a common welding seam (18), wherein the bearing flange (13, 30) is provided with the collar (17, 29) on an outer side (16, 31) facing away from hot waste gas, the inner sheet metal shell (3, 26) has a collar (12) at an outer end (9, 28), with which it grips around the outer sheet metal shell (2, 27) and wherein both sheet metal shells (3, 26 and 2, 27) are connected by a common welding seam (18) to the collar (17, 29) of the bearing flange (13, 30), wherein up to the outer end (9, 28) of the inner sheet metal shell (3, 26) an air gap (5, 32) is provided between the inner sheet metal shell (3, 26) and the outer sheet metal shell (2, 27).

2. Connection of a double-walled turbocharger housing according to claim 1, **characterised in that** the turbocharger housing (1, 25) can be connected via the bearing flange (13, 30) to a rotor group with an adjustable turbine geometry.

3. Connection of a double-walled turbocharger housing according to any of the preceding claims, **characterised in that** the air gap (5, 32) at the outer end (9, 28) of the inner sheet metal shell (3, 26) has minimum width of 1 mm.

4. Connection of a double-walled turbocharger housing according to any of the preceding claims, **characterised in that** the collar (12) of the inner sheet metal shell (3, 26) is clamped between the outer sheet metal shell (2, 27) and the collar (17, 29), in particular by a respective transition fit.

5. Connection of a double-walled turbocharger housing according to any of the preceding claims, **characterised in that** the inner sheet metal shell (3, 26) is configured to protrude outwardly at its outer end (9) in a radial direction (R), wherein the collar (12) is oriented away by essentially 90° in relation to the radial direction (R) and from the bearing flange (13).

6. Connection of a double-walled turbocharger housing according to any of the preceding claims, **characterised in that** the outer sheet metal shell (2) has a collar (36) which is oriented in radial direction, wherein the collar (36) rests from the inside against the collar (12) and specifically the collar (12) of the inner sheet metal shell (2) rests against the collar (17) of the bearing flanges (13) in radial direction (R).

7. Connection of a double-walled turbocharger housing according to any of the preceding claims, **characterised in that** the inner sheet metal shell (26) at its outer end (28) has an outwardly bent collar (37), wherein one end (38) of the outer sheet metal shell (27) is arranged between the bent collar (37).

8. Connection of a double-walled turbocharger housing according to any of the preceding claims, **characterised in that** at least a section of the inner sheet metal shell (26) is bent around an end (38) of the outer sheet metal shell (27) in radial direction (R) and/or axial direction (A).

## Revendications

1. Liaison d'un carter de turbocompresseur (1, 25) à double paroi avec une coque en tôle intérieure (3, 26) et avec une coque en tôle extérieure (2, 27), distante de la coque en tôle intérieure par le biais d'un entrefer (5, 32), au niveau d'une bride de palier (13, 30) avec un collet (17, 29) par l'intermédiaire d'un cordon de soudure commun (18), dans laquelle la bride de palier (13, 30) est munie du collet (17, 29) sur un côté extérieur (16, 31) éloigné d'un gaz d'échappement chaud, la coque en tôle intérieure (3, 26) présente au niveau d'une extrémité extérieure (9, 28) un collet (12) avec lequel elle entoure la coque en tôle extérieure (2, 27) et dans laquelle les deux coques en tôle (3, 26 et 2, 27) sont reliées par l'intermédiaire d'un cordon de soudure commun (18) au collet (17, 29) de la bride de palier (13, 30), dans laquelle un entrefer (5, 32) existe entre la coque en tôle intérieure (3, 26) et la coque en tôle extérieure (2, 27) jusqu'à l'extrémité extérieure (9, 28) de la coque en tôle intérieure (3, 26).

2. Liaison d'un carter de turbocompresseur à double paroi selon la revendication 1, **caractérisée en ce que** le carter de turbocompresseur (1, 25) peut être attaché par l'intermédiaire de la bride de palier (13, 30) à un groupe rotorique ayant une géométrie de turbine réglable.

3. Liaison d'un carter de turbocompresseur à double paroi selon l'une quelconque des revendications précédentes, **caractérisée en ce que** l'entrefer (5, 32) présente une largeur minimale de 1 mm au niveau de l'extrémité extérieure (9, 28) de la coque en tôle intérieure (3, 26).

4. Liaison d'un carter de turbocompresseur à double paroi selon l'une quelconque des revendications précédentes, **caractérisée en ce que** le collet (12) de la coque en tôle intérieure (3, 26) est serré entre la coque en tôle extérieure (2, 27) et le collet (17, 29), en particulier par un ajustement de transition respectif.

5. Liaison d'un carter de turbocompresseur à double paroi selon l'une quelconque des revendications précédentes, **caractérisée en ce que** la coque en tôle intérieure (3, 26) est réalisée au niveau de son extrémité extérieure (9) de manière à dépasser à l'extérieur en direction radiale (R), dans laquelle le collet (12) est agencé orienté globalement à 90° par rapport à la direction radiale (R) et s'éloignant de la bride de palier (13).

6. Liaison d'un carter de turbocompresseur à double paroi selon l'une quelconque des revendications précédentes, **caractérisée en ce que** la coque en tôle extérieure (2) présente un collet (36) orienté dans la direction radiale, dans laquelle le collet (36) vient s'appuyer de l'intérieur contre le collet (12) et appuie en particulier le collet (12) de la coque en tôle intérieure (2) contre le collet (17) de la bride de palier (13) dans la direction radiale (R).

7. Liaison d'un carter de turbocompresseur à double paroi selon l'une quelconque des revendications précédentes, **caractérisée en ce que** la coque en tôle intérieure (26) présente au niveau de son extrémité extérieure (28) un collet renversé (37) vers l'extérieur, dans laquelle une extrémité (38) de la coque en tôle extérieure (27) est agencée entre le collet renversé (37).

8. Liaison d'un carter de turbocompresseur à double paroi selon l'une quelconque des revendications précédentes, **caractérisée en ce que** la coque en tôle intérieure (26) entoure par un collet au moins en partie une extrémité (38) de la coque en tôle extérieure (27) dans la direction radiale (R) et/ou dans la direction axiale (A).
